# EUROPEAN PATENT APPLICATION

(11) **EP 1 406 401 A1**
(43) Date of publication of application: **07.04.2004**
(21) Application number: 02705278.6
(22) Date of filing: 15.03.2002
(51) Int. Cl.: H04B 10/20, H04L 12/42

(54) **OPTICAL NETWORK SYSTEM AND CONTROLLER**

(30) Priority: 13.06.2001 JP 2001177949
(71) Applicant: J.S.T. Mfg. Co., Ltd., Osaka, 542-0081 (JP)
(72) Inventor: KATSUYAMA, Yutaka, Sakai-shi, Osaka 599-8233 (JP); MORIYAMA, Keiko c/o J.S.T. Mfg. Co., Ltd., Nishikamo-gun, Aichi 470-0201 (JP)
(74) Representative: Joly, Jean-Jacques
(86) International application number: PCT/JP2002/002523
(87) International publication number: WO 2002/103939

(57) **Abstract**

Nodes (4A, 4B, 4C, 4D) take optical signals different in wavelength from one another out of a network optical fiber (3), and send out optical signals different in wavelength from one another to the network optical fiber (3). A controller (5) converts an optical signal received through the network optical fiber (3) into an optical signal of the wavelength assigned to the destination node, based on address information contained in the received optical signal, and outputs the optical signal after the conversion to the network optical fiber (3).

## Description

### Technical Field

The present invention relates to an optical network system, more specifically, to an optical network system in which data transfer is performed using wavelength division multiplexing.

### Background Art

In a local area network (LAN), a medium area network (MAN), or the like, data transfer between personal computers connected to the network is performed by electrical communication using electric signals. It is, however, expected that electrical communication may reach its limit in communication capacity attendant upon a recent increase in the amount of information to be transferred. Therefore, studies and developments of systems have been made in which data transfer is performed by optical communication using optical fibers that is larger in communication capacity than electrical communication. As one of them, there is known a system disclosed in JP-A-5-14283.

The system disclosed in the above JP-A-5-14283 comprises optical fibers in a ring and four nodes connected to the optical fibers and assigned wavelengths different from one another as addresses. Data transfer is performed between outside-node machines, for example, personal computers, connected to the nodes.

An outline of date transfer in the system disclosed in the above official gazette will be described. In the source node, an electric signal from an outside-node machine is converted into an optical signal of a wavelength assigned to the destination node. Subsequently, in the source node, the optical signal after the conversion is inserted in a time slot in which that wavelength does not exist, and then output to an optical fiber. The optical signal output to the optical fiber passes without any change through nodes existing - between.the source node and the destination node. In the destination node, the optical signal of the wavelength assigned to that node is extracted from optical signals being transmitted in the optical fiber, by an optical wavelength selection switch provided in the node. The extracted optical signal is thereby taken in the node.

In the above-described system, however, each node must be constructed such that the node can output optical signals of all wavelengths assigned to the nodes other than that node. Therefore, when a new node is added, every node existing before the addition must be adjusted so that the node can generate an optical signal of a wavelength assigned to the added node. This is not a system construction suitable for addition of nodes. It is hard to say that the system is superior in extensibility.

In addition, each node must be constructed not only so that the node can output optical signals of all wavelengths assigned to the nodes other than that node, but also so that collision of optical signals of the same wavelength, which may occur when data is transferred from a plurality of nodes to the same node, can be avoided. Therefore, the construction of each node is complicated and the cost of the node is high.

An object of the present invention is to provide an optical network system large in communication capacity and capable of high-rate communication, wherein the machine construction is simple, the cost of the whole of the system is low, and the system is superior in extensibility.

### Disclosure of the Invention

An optical network system of the present invention is characterized by comprising a network optical fiber extending in a ring; a plurality of node machines connected to said network optical fiber, each of said plurality of node machines taking an optical signal of a wavelength assigned in advance out of optical signals being transmitted in said network optical fiber, and outputting an optical signal of a wavelength assigned in advance, to said network optical fiber, said plurality of node machines being different in assigned wavelength from one another; and a controller connected to said network optical fiber, said controller converting an optical signal received from at least one of said plurality of node machines through said network optical fiber into an optical signal of a wavelength assigned in advance to the destination node machine on the basis of destination information contained in the received optical signal for specifying the destination, and outputting the optical signal after the conversion to said network optical fiber.

According to the optical network system, the controller converts a received optical signal, i.e., an optical signal of the wavelength assigned to the source node machine, into an optical signal of the wavelength assigned to the destination node machine, and outputs the optical signal to the network optical fiber. Therefore, data transfer between node machines can be realized if each node machine can output optical signals of one wavelength assigned to that node. Thus, in the optical network system of the present invention, the cost of each node machine can be held down in comparison with a system wherein each node machine must be constructed such that the node machine can generate optical signals of all wavelengths assigned to the other node machines. As a result, the cost of the whole optical network system can be also held down.

In addition, when each node machine outputs an optical signal of the wavelength assigned to that node machine to the network optical fiber, there occurs no collision between optical signals of the same wavelength. Thus, there is no need of constructing each node machine in consideration of collision between optical signals of the same wavelength. This simplifies the construction of each node machine.

Further, in case of newly adding a node machine after the optical network system is constructed, it suffices that only the node machine to be added is established. There is no need of adjusting any node machine already existing such that the node machine can generate optical signals of the wavelength assigned to the node machine to be newly added. Thus, addition of node machines is easy even when the number of node machines is large, and the optical network system is superior in extensibility.

The above optical network system is characterized in that said controller is further connected to an external optical fiber connecting said controller to an external machine outside the optical network system, and said controller converts an optical signal received through said network optical fiber into an optical signal of a wavelength predetermined for external communication when destination information contained in the received optical signal for specifying the destination indicates the external machine, and outputs the optical signal after the conversion to said external optical fiber. This can realize an increase in rate of data transfer from a node machine in the optical network system to the outside of the optical network system.

The above optical network system is characterized in that said controller is further connected to an external optical fiber connecting said controller to an external machine outside the optical network system, and said controller converts an optical signal received from said external machine through said external optical fiber into an optical signal of a wavelength assigned in advance to the destination node machine on the basis of destination information contained in the received optical signal for specifying the destination, and outputting the optical signal after the conversion to said network optical fiber. This can realize an increase in rate of data transfer from the outside of the optical network system to a node machine in the optical network system.

An optical network system is characterized by comprising a network optical fiber extending in a ring; a plurality of node machines connected to said network optical fiber, each of said plurality of node machines taking an optical signal of a wavelength assigned in advance out of optical signals being transmitted in said network optical fiber, said plurality of node machines being different in assigned wavelength from one another; and a controller connected to said network optical fiber and an external optical fiber to be used for communication with an external machine, said controller converting an optical signal received from said external machine through said external optical fiber into an optical signal of a wavelength assigned in advance to the destination node machine on the basis of destination information contained in the received optical signal for specifying the destination, and outputting the optical signal after the conversion to said network optical fiber. According to this optical network system, in case of newly adding a node machine after the optical network system is constructed, it suffices that only the node machine to be added is established. There is no need of adjusting any node machine already existing. Thus, addition of node machines is easy even when the number of node machines is large, and the optical network system is superior in extensibility.

A controller of the present invention is characterized in that said controller is connected through a network optical fiber extending in a ring to a plurality of node machines assigned wavelengths in advance such that the wavelengths of optical signals to be taken out of said network optical fiber are different from one another and the wavelengths of optical signals to be output to said network optical fiber are different from one another, and said controller comprises a plurality of electric-optic converters that correspond to said plurality of node machines, respectively, and convert electric signals into optical signals of wavelengths assigned in advance to said plurality of node machines, respectively; a multiplexer that multiplexes a plurality of optical signals different in wavelength converted by said plurality of electric-optic converters, and outputs the resultant optical signals to said network optical fiber; a demultiplexer that demultiplexes optical signals of a plurality of wavelengths received through said network optical fiber into optical signals of the respective wavelengths; a plurality of optic-electric converters that convert the optical signals demultiplexed by said demultiplexer into electric signals; destination specifying means that specifies the destination on the basis of destination information contained in the electric signal converted by each of said optic-electric converters; and an electric switch that outputs said electric signal to one of said electric-optic converters corresponding to the destination node machine specified by said destination specifying means.

According to the controller, a controller that converts an optical signal received through the network optical fiber into an optical signal of the wavelength assigned in advance to the destination node machine corresponding to destination information contained in the received optical signal, can be realized in a simple construction.

The controller is characterized in that said controller is further connected to an external optical fiber connecting said controller to an external machine, and said controller further comprises an external electric-optic converter that converts an electric signal converted by one of said optic-electric converters, into an optical signal of a wavelength determined for external communication, and outputs the optical signal after the conversion to said external optical fiber. Thereby, a controller that converts an optical signal received through the network optical fiber into an optical signal of the wavelength determined for external communication, can be realized in a simple construction.

The controller is characterized in that said controller is further connected to an external optical fiber connecting said controller to an external machine, and said controller further comprises an external optic-electric converter that converts an optical signal received from said external machine through said external optical fiber into an electric signal, and outputs the electric signal after the conversion to said destination specifying means. Thereby, a controller that converts an optical signal received through the external optical fiber into an optical signal of the wavelength assigned in advance to the destination node machine corresponding to destination information contained in the received optical signal, can be realized in a simple construction.

A controller is characterized in that said controller is connected through a network optical fiber extending in a ring to a plurality of node machines assigned wavelengths in advance such that the wavelengths of optical signals to be taken out of said network optical fiber are different from one another, and said controller is further connected to an external machine through an external optical fiber, and said controller comprises a plurality of electric-optic converters that correspond to said plurality of node machines, respectively, and convert electric signals into optical signals of wavelengths assigned in advance to said plurality of node machines, respectively; a multiplexer that multiplexes a plurality of optical signals different in wavelength generated by said plurality of electric-optic converters, and outputs the resultant optical signals to said network optical fiber; an optic-electric converter that converts an optical signal received from said external machine through said external optical fiber into an electric signal; destination specifying means that specifies the destination on the basis of destination information contained in the electric signal converted by said optic-electric converter; and an electric switch that outputs said electric signal to one of said electric-optic converters corresponding to the destination node machine specified by said destination specifying means.

According to the controller, a controller that converts an optical signal received through the external optical fiber into an optical signal of the wavelength assigned in advance to the destination node machine corresponding to destination information contained in the received optical signal, can be realized in a simple construction.

### Brief Description of Drawings

FIG. 1 is a diagram illustrating the whole construction of an optical network system according to an embodiment of the present invention;
FIG. 2 is a diagram illustrating the construction of a node constituting the optical network system of FIG. 1;
FIG. 3 is a diagram illustrating the construction of a controller constituting the optical network system of FIG. 1;
FIG. 4 is a flowchart of data transfer processing in the optical network system of FIG. 1;
FIG. 5 is a flowchart of data transfer processing in the optical network system of FIG. 1;
FIG. 6 is a flowchart of data transfer processing in the optical network system of FIG. 1; and
FIG. 7 is a diagram illustrating another construction of a node machine in FIG. 1.

### Best Mode for Carrying Out the Invention

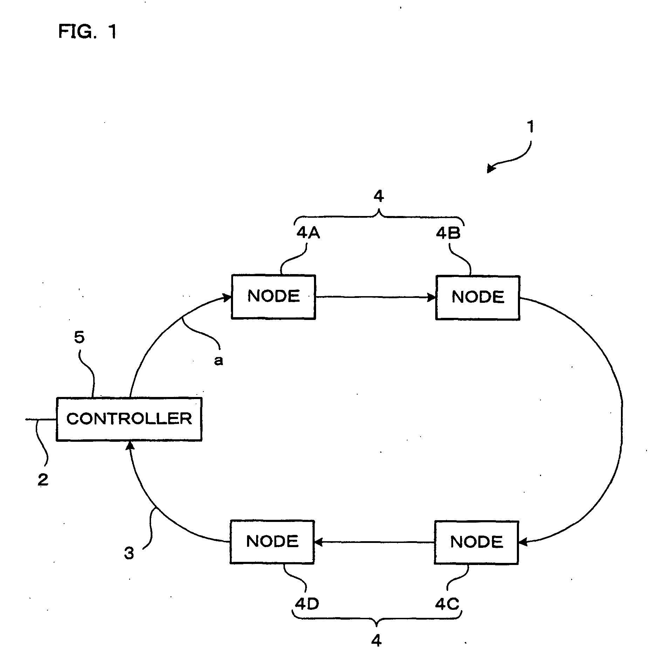

Hereinafter, an optical network system according to an embodiment of the present invention will be described with reference to FIGS. 1 to 6.

First, the whole construction of the optical network system according to the embodiment of the present invention will be described with reference to FIG. 1. FIG. 1 is a diagram illustrating the whole construction of the optical network system according to this embodiment.

The optical network system 1 of FIG. 1 comprises an optical fiber (hereinafter referred to as external optical fiber) 2 connecting the optical network system 1 to the outside, singlemode optical fibers (hereinafter referred to as network optical fiber) 3 extending in a ring within the optical network system 1, four nodes 4A, 4B, 4C, and 4D, and a controller 5. The nodes 4A, 4B, 4C, and 4D are connected to the network optical fiber 3 in this order from the output side of the controller 5. Optical signals are transmitted in the direction of an arrow a within the network optical fiber 3.

The nodes 4A, 4B, 4C, and 4D are designed so that optical signals to be taken out of the network optical fiber 3 by the respective nodes 4A, 4B, 4C, and 4D are different in wavelength from one another. The nodes 4A, 4B, 4C, and 4D are further designed so that the wavelength of an optical signal to be inserted in the network optical fiber 3 by each of the nodes 4A, 4B, 4C, and 4D is the same as the wavelength of an optical signal to be taken out of the network optical fiber 3 by that node. The wavelengths of optical signals to be taken out of/inserted in the network optical fiber 3 by the nodes 4A, 4B, 4C, and 4D are represented by λA, λB, λC, and λD, respectively. For the wavelengths λA, λB, λC, and λD, a band of 1.55 micrometer can be used for example. By way of example, the wavelength λA can be 1.53 micrometer, the wavelength λB can be 1.54 micrometer, the wavelength λC can be 1.55 micrometer, and the wavelength λD can be 1.56 micrometer.

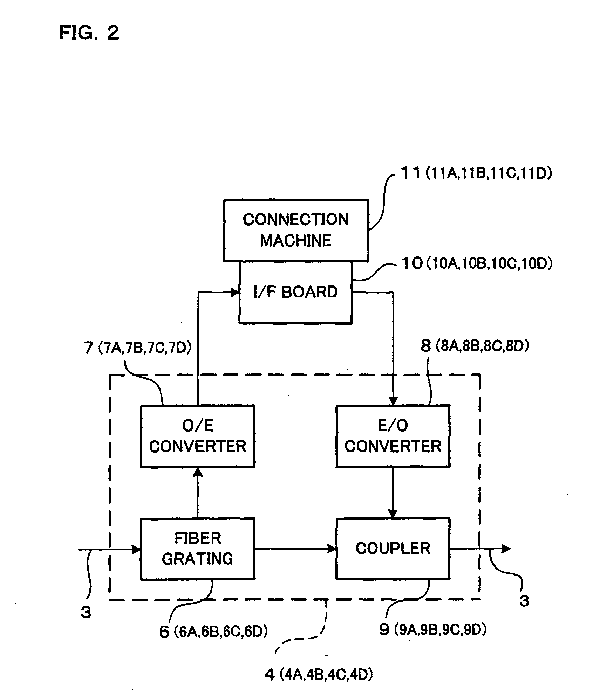

Next, the machine construction of each node 4 constituting the optical network system of FIG. 1 will be described with reference to FIG. 2. FIG. 2 is a diagram illustrating the construction of a node constituting the optical network system the whole construction of which is illustrated in FIG. 1.

The node 4 illustrated in FIG. 2 comprises a fiber grating 6 having wavelength selectivity, an optic-electric converter (hereinafter referred to as O/E converter) 7, an electric-optic converter (hereinafter referred to as E/O converter) 8, and a coupler 9. A machine (hereinafter referred to as connection machine) 11 such as a personal computer or a digital TV is connected to the node 4 through an input/output interface board (hereinafter referred to as I/F board) 10. That is, the nodes 4A, 4B, 4C, and 4D comprise fiber gratings 6A, 6B, 6C, and 6D, O/E converters 7A, 7B, 7C, and 7D, E/O converters 8A, 8B, 8C, and 8D, and couplers 9A, 9B, 9C, and 9D, respectively. Connection machines 11A, 11B, 11C, and 11D are connected to the nodes 4A, 4B, 4C, and 4D through I/F boards 10A, 10B, 10C, and 10D, respectively.

Hereinafter, details of components of the nodes 4A, 4B, 4C, and 4D will be described in the order of the nodes 4A, 4B, 4C, and 4D.

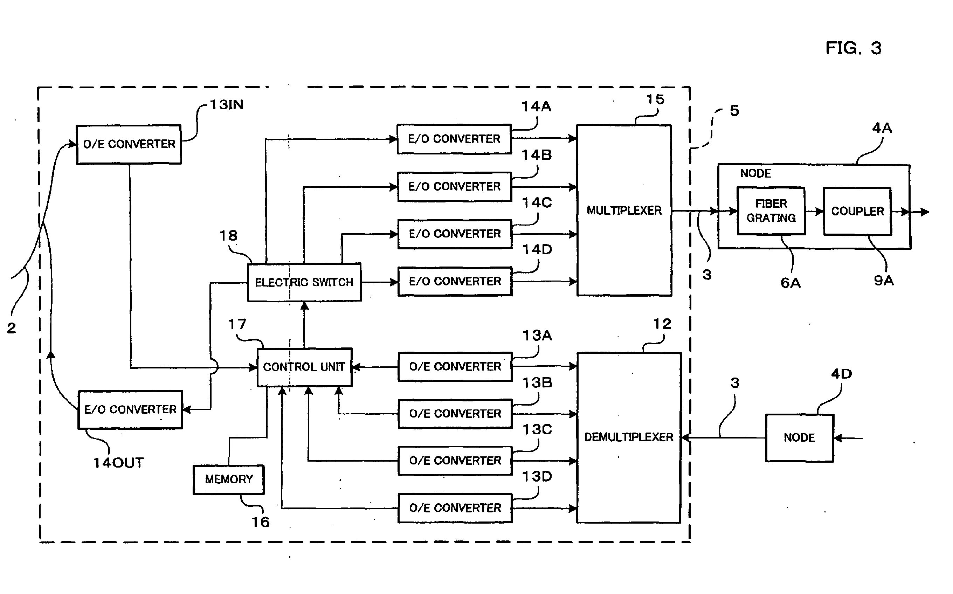

The input side of the fiber grating 6A in the node 4A is connected to the output side of the controller 5 through the network optical fiber 3 (see FIG. 3). The fiber grating 6A takes an optical signal of the wavelength λA out of optical signals of the wavelengths λA, λB, λC, and λD being transmitted in the network optical fiber 3, and then sends out the taken-out optical signal of the wavelength λA to the O/E converter 7A. The fiber grating 6A allows optical signals of the wavelengths λB, λC, and λD of optical signals of the wavelengths λA, λB, λC, and λD being transmitted in the network optical fiber 3, to pass through the fiber grating 6A. The fiber grating 6A sends out the optical signals of the wavelengths λB, λC, and λD to the coupler 9A.

The O/E converter 7A comprises a photo diode (hereinafter referred to as PD) for converting an optical signal of the wavelength λA into an electric signal. The O/E converter 7A converts an optical signal of the wavelength λA sent from the fiber grating 6A, into an electric signal, and then outputs the electric signal after the conversion to the connection machine 11A through the I/F board 10A.

The E/O converter 8A comprises a laser diode (hereinafter referred to as LD) for converting an electric signal into an optical signal of the wavelength λA. The E/O converter 8A converts an electric signal input from the connection machine 11A through the I/F board 10A, into an optical signal of the wavelength λA, and then outputs the optical signal after the conversion to the coupler 9A.

The coupler 9A outputs the optical signals of the wavelengths λB, λC, and λD having passed through the fiber grating 6A, and the optical signal of the wavelength λA input from the E/O converter 8A, to the network optical fiber 3.

The input side of the fiber grating 6B in the node 4B is connected to the output side of the coupler 9A in the node 4A through the network optical fiber 3. The fiber grating 6B takes an optical signal of the wavelength λB out of optical signals of the wavelengths λA, λB, λC, and λD being transmitted in the network optical fiber 3, and then sends out the taken-out optical signal of the wavelength λB to the O/E converter 7B. The fiber grating 6B allows optical signals of the wavelengths λA, λC, and λD of optical signals of the wavelengths λA, λB, λC, and λD being transmitted in the network optical fiber 3, to pass through the fiber grating 6B. The fiber grating 6B sends out the optical signals of the wavelengths λA, λC, and λD to the coupler 9B.

The O/E converter 7B comprises a PD for converting an optical signal of the wavelength λB into an electric signal. The O/E converter 7B converts an optical signal of the wavelength λB sent from the fiber grating 6B, into an electric signal, and then outputs the electric signal after the conversion to the connection machine 11B through the I/F board 10B.

The E/O converter 8B comprises an LD for converting an electric signal into an optical signal of the wavelength λB. The E/O converter 8B converts an electric signal input from the connection machine 11B through the I/F board 10B, into an optical signal of the wavelength λB, and then outputs the optical signal after the conversion to the coupler 9B.

The coupler 9B outputs the optical signals of the wavelengths λA, λC, and λD having passed through the fiber grating 6B, and the optical signal of the wavelength λB input from the E/O converter 8B, to the network optical fiber 3.

The input side of the fiber grating 6C in the node 4C is connected to the output side of the coupler 9B in the node 4B through the network optical fiber 3. The fiber grating 6C takes an optical signal of the wavelength λC out of optical signals of the wavelengths λA, λB, λC, and λD being transmitted in the network optical fiber 3, and then sends out the taken-out optical signal of the wavelength λC to the O/E converter 7C. The fiber grating 6C allows optical signals of the wavelengths λA, λB, and λD of optical signals of the wavelengths λA, λB, λC, and λD being transmitted in the network optical fiber 3, to pass through the fiber grating 6C. The fiber grating 6C sends out the optical signals of the wavelengths λA, λB, and λD to the coupler 9C.

The O/E converter 7C comprises a PD for converting an optical signal of the wavelength λC into an electric signal. The O/E converter 7C converts an optical signal of the wavelength λC sent from the fiber grating 6C, into an electric signal, and then outputs the electric signal after the conversion to the connection machine 11C through the I/F board 10C.

The E/O converter 8C comprises an LD for converting an electric signal into an optical signal of the wavelength λC. The E/O converter 8C converts an electric signal input from the connection machine 11C through the I/F board 10C, into an optical signal of the wavelength λC, and then outputs the optical signal after the conversion to the coupler 9C.

The coupler 9C outputs the optical signals of the wavelengths λA, λB, and λD having passed through the fiber grating 6C, and the optical signal of the wavelength λC input from the E/O converter 8C, to the network optical fiber 3.

The input side of the fiber grating 6D in the node 4D is connected to the output side of the coupler 9C in the node 4C through the network optical fiber 3. The fiber grating 6D takes an optical signal of the wavelength λD out of optical signals of the wavelengths λA, λB, λC, and λD being transmitted in the network optical fiber 3, and then sends out the taken-out optical signal of the wavelength λD to the O/E converter 7D. The fiber grating 6D allows optical signals of-the wavelengths λA, λB, and λC of optical signals of the wavelengths λA, λB, λC, and λD being transmitted in the network optical fiber 3, to pass through the fiber grating 6D. The fiber grating 6D sends out the optical signals of the wavelengths λA, λB, and λC to the coupler 9C.

The O/E converter 7D comprises a PD for converting an optical signal of the wavelength λD into an electric signal. The O/E converter 7D converts an optical signal of the wavelength λD sent from the fiber grating 6D, into an electric signal, and then outputs the electric signal after the conversion to the connection machine 11D through the I/F board 10D.

The E/O converter 8D comprises an LD for converting an electric signal into an optical signal of the wavelength λD. The E/O converter 8D converts an electric signal input from the connection machine 11D through the I/F board 10D, into an optical signal of the wavelength λD, and then outputs the optical signal after the conversion to the coupler 9D.

The coupler 9D outputs the optical signals of the wavelengths λA, λB, and λC having passed through the fiber grating 6D, and the optical signal of the wavelength λD input from the E/O converter 8D, to the network optical fiber 3.

Next, the machine construction of the controller 5 constituting the optical network system of FIG. 1 will be described with reference to FIG. 3. FIG. 3 is a diagram illustrating the construction of the controller constituting the optical network system the whole construction of which is illustrated in FIG. 1.

The controller 5 illustrated in FIG. 3 comprises a demultiplexer 12, O/E converters 13A, 13B, 13C, 13D, and 13IN, E/O converters 14A, 14B, 14C, 14D,.and 14OUT, a multiplexer 15, a memory 16, a control unit 17, and an electric switch 18.

The demultiplexer 12 is connected to the output side of the coupler 9D of the node 4D through the network optical fiber 3. The demultiplexer 12 demultiplexes an optical signal received through the network optical fiber 3, into optical signals of the respective wavelengths, and outputs the optical signals of the wavelengths λA, λB, λC, and λD to the O/E converters 13A, 13B, 13C, and 13D, respectively.

The O/E converter 13A comprises a PD for converting an optical signal of the wavelength λA into an electric signal. The O/E converter 13A converts an optical signal of the wavelength λA sent from the demultiplexer 12, into an electric signal, and outputs the electric signal after the conversion to the control unit 17. The O/E converter 13B comprises a PD for converting an optical signal of the wavelength λB into an electric signal. The O/E converter 13B converts an optical signal of the wavelength λB sent from the demultiplexer 12, into an electric signal, and outputs the electric signal after the conversion to the control unit 17. The O/E converter 13C comprises a PD for converting an optical signal of the wavelength λC into an electric signal. The O/E converter 13C converts an optical signal of the wavelength λC sent from the demultiplexer 12, into an electric signal, and outputs the electric signal after the conversion to the control unit 17. The O/E converter 13D comprises a PD for converting an optical signal of the wavelength λD into an electric signal. The O/E converter 13D converts an optical signal of the wavelength λD sent from the demultiplexer 12, into an electric signal, and outputs the electric signal after the conversion to the control unit 17.

The O/E converter 13IN comprises a PD for converting an optical signal of the wavelength λ0 into an electric signal. The O/E converter 13IN converts an optical signal of the wavelength λ0 received through the external optical fiber 2, into an electric signal, and outputs the electric signal after the conversion to the control unit 17. For example, the wavelength λ0 is in a band of 1.3 micrometer.

The E/O converter 14A comprises an LD for converting an electric signal into an optical signal of the wavelength λA. The E/O converter 14A converts an electric signal received from the control unit 17 through the electric switch 18, into an optical signal of the wavelength λA, and outputs the optical signal after the conversion to the multiplexer 15. The E/O converter 14B comprises an LD for converting an electric signal into an optical signal of the wavelength λB. The E/O converter 14B converts an electric signal received from the control unit 17 through the electric switch 18, into an optical signal of the wavelength λB, and outputs the optical signal after the conversion to the multiplexer 15. The E/O converter 14C comprises an LD for converting an electric signal into an optical signal of the wavelength λC. The E/O converter 14C converts an electric signal received from the control unit 17 through the electric switch 18, into an optical signal of the wavelength λC, and outputs the optical signal after the conversion to the multiplexer 15. The E/O converter 14D comprises an LD for converting an electric signal into an optical signal of the wavelength λD. The E/O converter 14D converts an electric signal received from the control unit 17 through the electric switch 18, into an optical signal of the wavelength λD, and outputs the optical signal after the conversion to the multiplexer 15.

The E/O converter 14OUT comprises an LD for converting an electric signal into an optical signal of the wavelength λ0. The E/O converter 14OUT converts an electric signal received from the control unit 17 through the electric switch 18, into an optical signal of the wavelength λ0, and outputs the optical signal after the conversion to the external optical fiber 2.

The multiplexer 15 multiplexes optical signals of the wavelengths λA, λB, λC, and λD sent from the E/O converters 14A, 14B, 14C, and 14D, and outputs the resultant optical signal to the network optical fiber 3.

The memory 16 stores therein data for making address information on the nodes 4A, 4B, 4C, and 4D correspond to the E/O converters 14A, 14B, 14C, and 14D that convert electric signals into optical signals of the wavelengths λA, λB, λC, and λD assigned in advance to the nodes 4A, 4B, 4C, and 4D. The memory 16 further stores therein data for making external addresses correspond to the E/O converter 14OUT for the outside.

The control unit 17 has a function as a transmission destination specifying means. The control unit 17 includes therein a CPU and so on. The control unit 17 reads address information out of an electric signal input from each of the O/E converters 13A, 13B, 13C, 13D, and 13IN, and analyzes the read-out address information. On the basis of information stored in the memory 16 and the analyzed address information, the control unit 17 then specifies one of the E/O converters 14A, 14B, 14C, 14D, and 14OUT corresponding to the address information contained in the electric signal. Further, the control unit 17 controls the electric switch 18 such that the electric signal is output to the specified E/O converter.

Switching of the electric switch 18 is controlled by the control unit 17. Thereby, each electric signal is output to the E/O converter corresponding to the address information contained in the electric signal.

Hereinafter, various kinds of data transfer processing in the above-described optical network system 1 will be described.

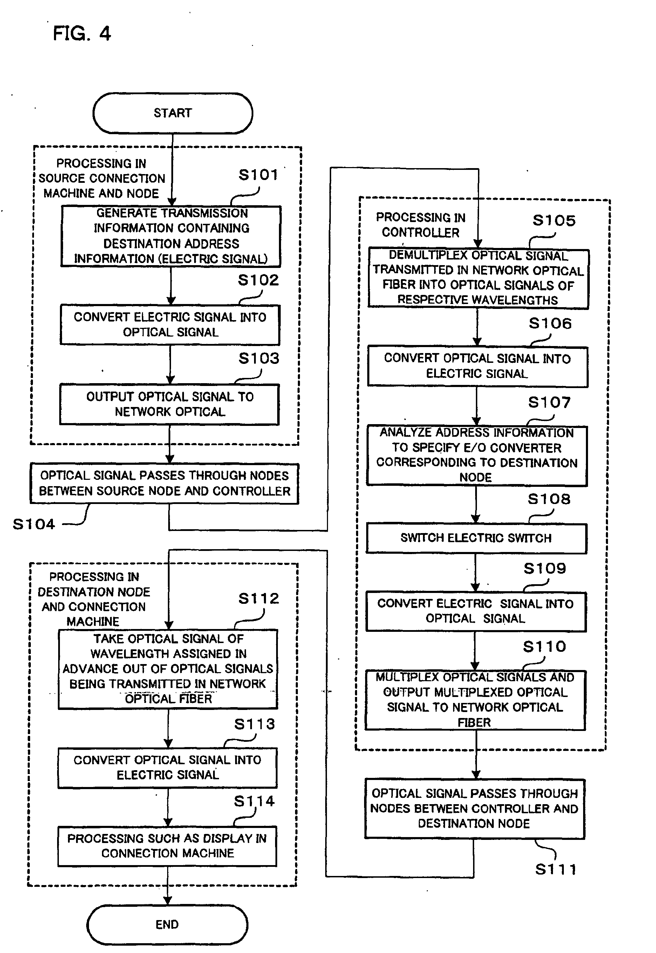

First, processing for data transfer between connection machines 11 in the above-described optical. network system 1 will be described with reference to FIG. 4. FIG. 4 is a flowchart of processing for data transfer between connection machines connected to nodes in the optical network system.

In Step S101, the connection machine 11 connected to the source node 4 generates an electric signal concerning transmission information, containing address information on the transmission destination, such as dynamic image data to be transmitted to the destination node 4. The generated electric signal is output to the E/O converter 8 through the I/F board 10.

In Step S102, the E/O converter 8 converts the electric signal received through the I/F board 10 in Step S101, into an optical signal of the wavelength assigned in advance to the source node 4, and then outputs the converted optical signal to the coupler 9.

In Step S103, the coupler 9 outputs the optical signal received from the E/O converter 8 in Step S102, to the network optical fiber 3.

As described above, by a series of processing from Step S101 to Step S103, the transmission information generated in the connection machine 11 connected to the source node 4 is converted into an optical signal of the wavelength assigned in advance to the source node 4, and then output to the network optical fiber 3.

In Step S104, the optical signal output by the source node 4 to the network optical fiber 3 passes through the nodes 4 existing between the source node 4 and the controller 5, and reaches the controller 5.

In Step S105, the demultiplexer 12 in the controller 5 demultiplexes an optical signal received through the network optical fiber 3, into optical signals of the respective wavelengths, and then outputs the optical signals after demultiplexing to the O/E converters 13A, 13B, 13C, and 13D corresponding to the respective wavelengths of the optical signals.

In Step S106, each of the O/E converters 13A, 13B, 13C, and 13D that received an optical signal from the demultiplexer 12 in Step S105, converts the received optical signal into an electric signal, and then outputs the electric signal after the conversion to the control unit 17.

In Step S107, the control unit 17 analyzes address information contained in the electric signal received from at least one of the O/E converters 13A, 13B, 13C, and 13D in Step S106. On the basis of information stored in the memory 16 and the analyzed address information, the control unit 17 specifies one of the E/O converters 14A, 14B, 14C, and 14D corresponding to the address information contained in the electric signal.

In Step S108, the control unit 17 controls the electric switch 18 such that the electric signal received in Step S106 is input to the E/O converter specified in Step S107. Thereby, the electric signal received by the control unit 17 in Step S106 is output to the E/O converter specified in Step S107. In case that the E/O converter specified in Step S107, i.e., the E/O converter corresponding to the destination node, has already been used by another connection machine 11, however, the transmission information is temporarily stored in a non-illustrated memory in the controller 5, and processing of transmitting the electric signal to the E/O converter corresponding to the destination node is again performed after a certain time period elapses.

In Step S109, each of the E/O converters 14A, 14B, 14C, and 14D to which an electric signal was input in Step S108, converts the input electric signal into an optical signal, and then outputs the optical signal after the conversion to the multiplexer 15.

In Step S110, the multiplexer 15 multiplexes the optical signal received from at least one of the E/O converters 14A, 14B, 14C, and 14D in Step S109, and then outputs the optical signal after multiplexing to the network optical fiber 3.

As described above, by a series of processing from Step S105 to Step S110, an optical signal having reached the controller 5 is converted into an optical signal of the wavelength assigned in advance to the destination node 4 corresponding to the address information contained in the former optical signal, and the optical signal after the conversion is output from the multiplexer 15 in the controller 5 to the network optical fiber 3.

In Step S111, the optical signal output by the controller 5 to the network optical fiber 3 passes through the nodes 4 existing between the controller 5 and the destination node 4, and reaches the destination node 4.

In Step S112, the fiber grating 6 in the destination node 4 takes an optical signal of the wavelength assigned in advance to the destination node 4, out of the optical signal being transmitted in the network optical fiber 3, and then outputs the taken-out optical signal to the O/E converter 7.

In Step S113, the O/E converter 7 converts the optical signal received from the fiber grating 6 in Step S112, into an electric signal, and then outputs the electric signal after the conversion to the connection machine 11 through the I/F board 10.

In Step S114, the connection machine 11 performs processing as predetermined with respect to the received electric signal, for example, the connection machine 11 displays information in relation to the electric signal received through the I/F board 10 in Step S113, or stores the electric signal in a memory.

As described above, by a series of processing from Step S112 to Step S114, the destination node 4 takes out the optical signal addressed to that node; from the network optical fiber 3, the taken-out optical signal is converted into an electric signal to be output to the connection machine 11, and the connection machine 11 performs predetermined processing.

By a series of processing from Step S101 to S114 as described above, information is transferred from the connection machine 11 of the source node to the connection machine 11 of the destination node.

Further, as an example of processing for data transfer between connection machines as described above, a case will be described wherein date is transferred from the connection machine 11A connected to the node 4A to the connection machine 11D connected to the node. 4D.

The connection machine 11A connected to the node 4A generates an electric signal with respect to transmission information, containing destination address information, to be transmitted to the connection machine 11D connected to the node 4A, and the generated electric signal is output to the E/O converter 8A through the I/F board 10A (Step101). The electric signal is converted by the E/O converter 8A into an optical signal of the wavelength λA, and the optical signal after the conversion is output to the coupler 9A (Step102). The optical signal after the conversion is output by the coupler 9 to the network optical fiber 3 (Step103).

The optical signal of the wavelength λA output by the node 4A to the network optical fiber 3 passes through the nodes 4B, 4C, and 4D existing between the node 4A and the controller 5, and reaches the controller 5 (Step104).

The optical signal of the wavelength λA having reached the controller 5 is output by the demultiplexer 12 to the O/E converter 13A (Step105). The optical signal of the wavelength λA is converted by the O/E converter 13A into an electric signal, and the electric signal after the conversion is output to the control unit 17 (Step106).

The control unit 17 analyzes address information contained in the electric signal received from the O/E converter 13A, and specifies the E/O converter 14D corresponding to the address information contained in the electric signal, on the basis of information stored in the memory 16 and the analyzed address information (Step107). The control unit 17 then controls the electric switch 18 such that the electric signal is input to the E/O converter 14D, and thereby the electric signal is output to the E/O converter 14D (Step108).

The electric signal is converted by the E/O converter 14D into an optical signal of the wavelength λD, and the optical signal after the conversion is output to the multiplexer 15 (Step109). The optical signal of the wavelength λD is output by the multiplexer 15 to the network optical fiber 3 (Step110).

The optical signal of the wavelength λD output by the multiplexer 15 of the controller 5 to the network optical fiber 3 passes through the nodes 4A, 4B, and 4C existing between the controller 5 and the destination node 4D, and reaches the destination node 4D (Step111).

The optical signal of the wavelength λD having reached the node 4D is taken out by the fiber grating 6D, and the taken-out optical signal is output to the O/E converter 7D (Step112). The optical signal of the wavelength λD is converted by the O/E converter 7D into an electric signal, and the electric signal after the conversion is output to the connection machine 11D through the I/F board 10D (Step113). The connection machine 11D performs processing of the electric signal as predetermined (Step114).

As described above, information is transferred from the connection machine 11A of the source node to the connection machine 11D of the destination node.

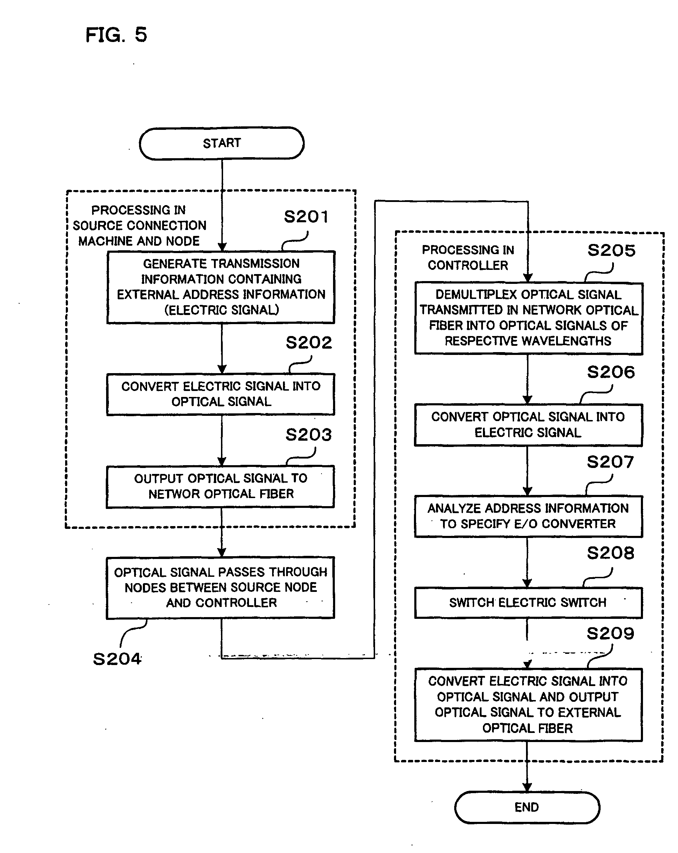

Next, processing in the above-described optical network system 1 for data transfer from a connection machine 11 to an external machine, i.e., a machine connected to the controller 5 through the external optical fiber 2, will be described with reference to FIG. 5. FIG. 5 is a flowchart of processing for data transfer from the connection machine connected to a node in the optical network system, to an external machine.

In Step S201, the connection machine 11 connected to the source node 4 generates an electric signal with respect to transmission information, containing external address information, to be transmitted to the outside, and the generated electric signal is output to the E/O converter 8 through the I/F board 10.

In Steps S202 and S203, substantially the same processing as in Steps S102 and S103 is performed. That is, the E/O converter 8 converts the electric signal received through the I/F board 10, into an optical signal of the wavelength assigned in advance to the source node. The optical signal after the conversion is output to the network optical fiber 3 through the coupler 9.

In Step S204, the optical signal output by the source node 4 to the network optical fiber 3 passes through the nodes 4 existing between the source node 4 and the controller 5, and reaches the controller 5.

In Steps S205 and S206, substantially the same processing as in Steps S105 and S106 is performed. That is, the optical signal having reached the controller 5 is demultiplexed by the demultiplexer 12 into optical signals of the respective wavelengths, and each optical signal is output to one of the O/E converters 13A, 13B, 13C, and 13D corresponding to the wavelength of the optical signal. The optical signal is converted by one of the O/E converters 13A, 13B, 13C, and 13D corresponding to the wavelength of the optical signal, into an electric signal, and the electric signal after the conversion is output to the control unit 17.

In Step S207, the control unit 17 analyzes address information contained in the electric signal received from at least one of the O/E converters 13A, 13B, 13C, and 13D. On the basis of information stored in the memory 16 and the analyzed address information, the control unit 17 then specifies the E/O converter 14OUT corresponding to the address information, i.e., external address information, contained in the electric signal.

In Step S208, the control unit 17 controls the electric switch 18 such that the electric signal received by the control unit 17 is input to the E/O converter 14OUT specified in Step S207. Thereby, the electric signal received by the control unit 17 is output to the E/O converter 14OUT specified in Step S207. In case that the E/O converter 14OUT has already been used by another connection machine 11, however, the transmission information is temporarily stored in a non-illustrated memory in the controller 5, and processing of transmitting the electric signal to the E/O converter 14OUT is again performed after a certain time period elapses.

In Step S209, the E/O converter 14OUT converts the electric signal received from the control unit 17 through the electric switch 18 in Step S208, into an optical signal of the wavelength λ0, and outputs the optical signal after the conversion to the external optical fiber 2.

As described above, by a series of processing from Step S205 to Step S209, the optical signal having received the controller 5 is converted into an optical signal of the wavelength λ0 for external communication, and the optical signal after the conversion is output to the external optical fiber 2.

By a series of processing from Step 201 to Step S209, information is transferred from the connection machine 11 of the source node to the outside of the optical network system 1.

Further, as an example of processing for data transfer from a connection machine to an external machine as described above, a case will be described wherein date is transferred from the connection machine 11A connected to the node 4A to an external machine.

The connection machine 11A connected to the node 4A generates an electric signal with respect to transmission information, containing external address information, to be externally transmitted, and the generated electric signal is output to the E/O converter 8A through the I/F board 10A (Step201). The electric signal is converted by the E/O converter 8A into an optical signal of the wavelength λA, and the optical signal after the conversion is output to the coupler 9A (Step202). The optical signal after the conversion is output by the coupler 9 to the network optical fiber 3 (Step203).

The optical signal of the wavelength λA output by the node 4A to the network optical fiber 3 passes through the nodes 4B, 4C, and 4D existing between the node 4A and the controller 5, and reaches the controller 5 (Step204).

The optical signal of the wavelength λA having reached the controller 5 is output by the demultiplexer 12 to the O/E converter 13A (Step205). The optical signal of the wavelength λA is converted by the O/E converter 13A into an electric signal, and the electric signal after the conversion is output to the control unit 17 (Step206).

The control unit 17 analyzes address information contained in the electric signal received from the O/E converter 13A, and specifies the E/O converter 14OUT corresponding to the address information, i.e., external address information, on the basis of information stored in the memory 16 and the analyzed address information (Step207). The control unit 17 then controls the electric switch 18 such that the electric signal is input to the E/O converter 14OUT, and thereby the electric signal is output to the E/O converter 14OUT (Step208).

The electric signal is converted by the E/O converter 14OUT into an optical signal of the wavelength λ0, and the optical signal after the conversion is output to the external optical fiber 2 (Step209).

As described above, information is transferred from the connection machine 11A of the source node to the outside of the optical network system 1.

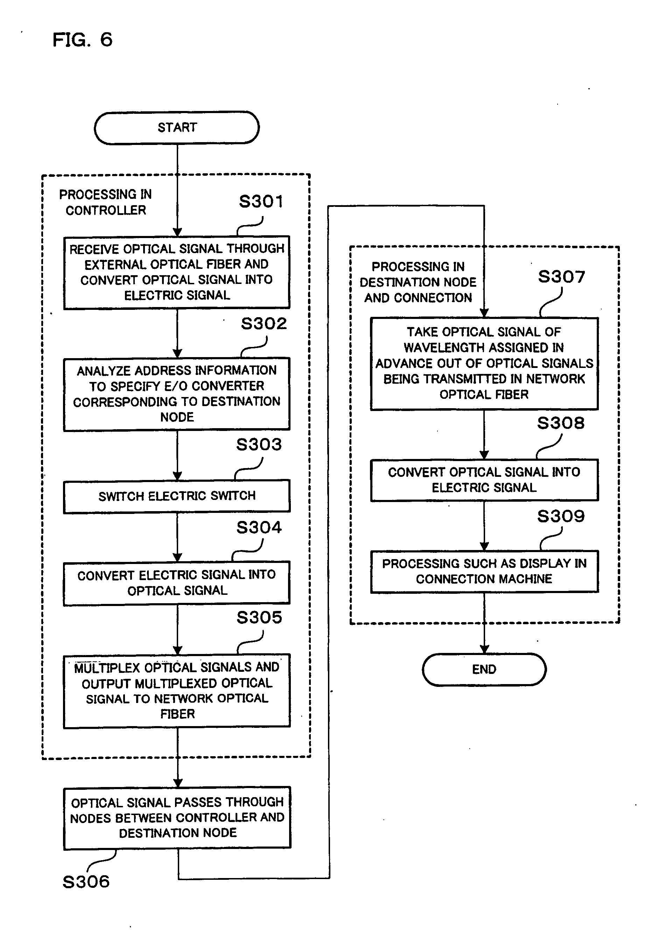

Next, processing in the above-described optical network system 1 for data transfer from an external machine to a connection machine 11 will be described with reference to FIG. 6. FIG. 6 is a flowchart of processing for data transfer from the outside of the optical network system to the connection machine connected to a node in the optical network system.

In Step S301, the controller 5 receives an optical signal through the external optical fiber 2, and the O/E converter 13IN in the controller 5 converts the optical signal received through the external optical fiber 2, into an electric signal, and outputs the electric signal after the conversion to the control unit 17.

In Steps S302, S303, S304, and S305 performed is substantially the same processing as in Steps S107, S108, S109, and S110, respectively. That is, the electric signal is converted by the.E/O converter corresponding to address information contained in the electric signal, into an optical signal of the wavelength assigned in advance to the destination node 4, and the optical signal after the conversion is output by the multiplexer 15 to the network optical fiber 3. In case that the E/O converter corresponding to the address information contained in the electric signal has already been used, however, the transmission information is temporarily stored in a non-illustrated memory in the controller 5, and processing of transmitting the electric signal to the E/O converter corresponding to the destination node is again performed after a certain time period elapses.

In Step S306, the optical signal output by the multiplexer 15 of the controller 5 to the network optical fiber 3 passes through the nodes 4 existing between the controller 5 and the destination node 4, and reaches the destination node 4.

In Steps S307, S308, and S309 performed is substantially the same processing as in Steps S112, S113, and S114, respectively. That is, the destination node 4 takes an optical signal of the wavelength assigned in advance to the destination node 4, out of the optical signal being transmitted in the network optical fiber 3, and converts the taken-out optical signal into an electric signal, and the connection machine 11 of the destination node performs predetermined processing to the electric signal after the conversion.

By a series of processing from Step S301 to Step S309 as described above, an external signal is transferred to the connection machine 11 of the destination node.

Further, as an example of processing for data transfer from an external machine to a connection machine as described above, a case will be described wherein date is transferred from the outside to the connection machine 11D connected to the node 4D.

An optical signal of the wavelength λ0 having reached the controller 5 through the external optical fiber 2 is converted by the O/E converter 13IN into an electric signal, and the electric signal after the conversion is output to the control unit 17 (Step301).

The control unit 17 analyzes address information contained in the electric signal received from the O/E converter 13IN, and specifies the E/O converter 14D corresponding to the address information contained in the electric signal, on the basis of information stored in the memory 16 and the analyzed address information (Step302). The control unit 17 then controls the electric switch 18 such that the electric signal is input to the E/O converter 14D, and thereby the electric signal is output to the E/O converter 14D (Step303).

The electric signal is converted by the E/O converter 14D into an optical signal of the wavelength λD, and the optical signal after the conversion is output to the multiplexer 15 (Step304). The optical signal of the wavelength λD is then output by the multiplexer 15 to the network optical fiber 3 (Step305).

The optical signal of the wavelength λD output by the multiplexer 15 of the controller 5 to the network optical fiber 3 passes through the nodes 4A, 4B, and 4C existing between the controller 5 and the destination node 4D, and reaches the destination node 4D (Step306).

The optical signal of the wavelength λD having reached the node 4D is taken out by the fiber grating 6D, and the taken-out optical signal is output to the O/E converter 7D (Step307). The optical signal of the wavelength λD is then converted by the O/E converter 7D into an electric signal, and the electric signal after the conversion is output to the connection machine 11D through the I/F board 10D (Step308). The connection machine 11D then performs predetermined processing to the electric signal (Step309).

As described above, information is transferred from the outside to the connection machine 11D of the destination node.

In the above-described optical network system according to this embodiment, each node 4 takes a signal in the state of optical signal in the node 4 out of the optical signals being transmitted in the network optical fiber 3 by the fiber grating 6 having wavelength selectivity, or does not take the optical signal in the node 4 and allows the optical signal to pass through the node 4. Therefore, an increase in rate is intended in case of data transfer between the connection machines 11 connected to nodes 4, data transfer from an external machine to the connection machine 11 connected to a node 4, and data transfer from the connection machine 11 connected to a node 4 to an external machine. Besides, because of optical communication, there is an advantage that the communication capacity is large.

In addition, an optical signal received by the controller 5, i.e., an optical signal of the wavelength assigned to the source node 4, is converted into an optical signal of the wavelength assigned to the destination node 4 to be output from the controller 5 to the network optical fiber. Therefore, data transfer between the connection machines 11 connected to nodes 4 can be realized if each node 4 can output optical signals of one wavelength assigned to that node. Thus, in the optical network system according to this embodiment, the cost of each node machine 4 can be held down in comparison with a system wherein each node must be constructed such that the node can generate optical signals of all wavelengths assigned to the other nodes. As a result, the cost of the whole optical network system 1 can be also held down. Besides, in case of newly adding a node 4 after the optical network system 1 is constructed, it suffices that only the node 4 to be added is established. There is no need of adjusting any node 4 already existing such that the node 4 can generate optical signals of the wavelength assigned to the node 4 to be newly added. Thus, addition of nodes is easy even when the number of nodes 4 is large, and the optical network system is superior in extensibility.

Further, an optical signal of the wavelength assigned to a node 4, sent to that node 4, is taken out by the fiber grating 6 provided before the coupler 9, and only optical signals of the other wavelengths are input to the coupler 9 from the network optical fiber 3. Therefore, when an optical signal of the wavelength assigned to the node 4 is output from the E/O converter 8 through the coupler 9 of the node 4 to the network optical fiber 3, there occurs no collision between optical signals of the same wavelength. Thus, there is no need of constructing each node 4 such that collision between optical signals of the same wavelength can be avoided. This simplifies the construction of each node.

Hereinbefore, a preferred embodiment of the present invention has been described. However, the present invention is never limited to the above-described embodiment, and various design changes are possible within the description of claims. For example, in the embodiment of the present invention, the number of nodes is four. However, the present invention is not limited to that. It is needless to say that an arbitrary number of nodes can be connected to the network optical fiber 3. In this case, the nodes connected to the network optical fiber 3 are assigned wavelengths different from one another, the demultiplexer in the controller 5 is replaced by one that can perform demultiplexing into the wavelengths corresponding to the number of nodes, and O/E converters and E/O converters are provided for optical signals of the wavelengths assigned to the respective nodes.

In addition, the controller 5 is not limited to the above-described construction. The controller 5 suffices if it is constructed such that it can converted a received optical signal into an optical signal of the wavelength assigned to the destination node 4. Further, although the wavelength of an optical signal to be taken by each node 4 out of the network optical fiber 3 is the same as the wavelength of an optical signal to be output by the node 4 to the network optical fiber 3, the wavelengths may be different from each other.

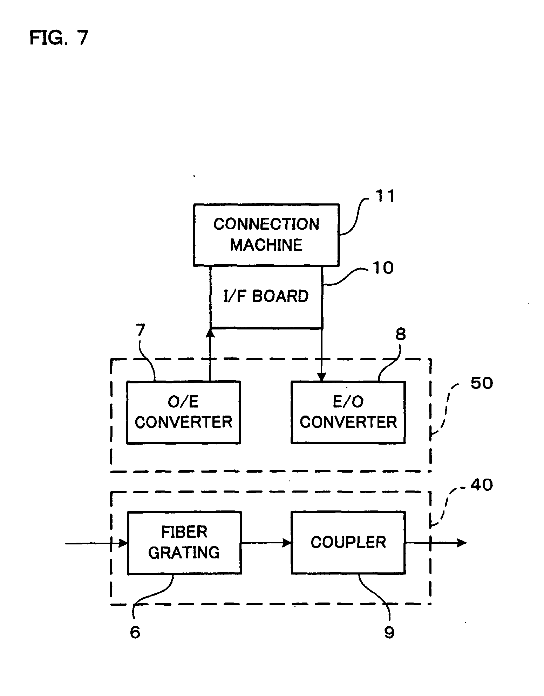

Further, in the embodiment of the present invention, each node 4 is constructed as illustrated in FIG. 2. However, as illustrated in FIG. 7, each node 40 comprising a fiber grating 6 and a coupler 9 may be separated from a converter 50 comprising an O/E converter 7 and an E/O converter 8. Although the number of parts increases, there is an advantage that machines that perform processing with electric signals and machines that perform processing with optical signals can be easily connected to the optical network system when machines that can perform various kinds of processing in the state of optical signal have spread. In case of a machine that can perform various kinds of processing in the state of optical signal, it is needless to say that the converter 50 comprising the O/E converter 7 and the E/O converter 8 is unnecessary.

### Industrial Applicability

The above-described optical network system and the controller used therein are applicable to a system or the like wherein the amount of data to be transferred is large, for example, in case of dynamic images.

## Claims

1. An optical network system ***characterized by*** comprising:
a network optical fiber extending in a ring;
a plurality of node machines connected to said network optical fiber, each of said plurality of node machines taking an optical signal of a wavelength assigned in advance out of optical signals being transmitted in said network optical fiber, and outputting an optical signal of a wavelength assigned in advance, to said network optical fiber, said plurality of node machines being different in assigned wavelength from one another; and
a controller connected to said network optical fiber, said controller converting an optical signal received from at least one of said plurality of node machines through said network optical fiber into an optical signal of a wavelength assigned in advance to the destination node machine on the basis of destination information contained in the received optical signal for specifying the destination, and outputting the optical signal after the conversion to said network optical fiber.

2. The optical network system according to claim 1, ***characterized in that*** said controller is further connected to an external optical fiber connecting said controller to an external machine outside the optical network system, and
said controller converts an optical signal received through said network optical fiber into an optical signal of a wavelength predetermined for external communication when destination information contained in the received optical signal for specifying the destination indicates the external machine, and outputs the optical signal after the conversion to said external optical fiber.

3. The optical network system according to claim 1, ***characterized in that*** said controller is further connected to an external optical fiber connecting said controller to an external machine outside the optical network system, and
said controller converts an optical signal received from said external machine through said external optical fiber into an optical signal of a wavelength assigned in advance to the destination node machine on the basis of destination information contained in the received optical signal for specifying the destination, and outputting the optical signal after the conversion to said network optical fiber.

4. An optical network system ***characterized by*** comprising:
a network optical fiber extending in a ring;
a plurality of node machines connected to said network optical fiber, each of said plurality of node machines taking an optical signal of a wavelength assigned in advance out of optical signals being transmitted in said network optical fiber, said plurality of node machines being different in assigned wavelength from one another; and
a controller connected to said network optical fiber and an external optical fiber to be used for communication with an external machine, said controller converting an optical signal received from said external machine through said external optical fiber into an optical signal of a wavelength assigned in advance to the destination node machine on the basis of destination information contained in the received optical signal for specifying the destination, and outputting the optical signal after the conversion to said network optical fiber.

5. A controller ***characterized in that*** said controller is connected through a network optical fiber extending in a ring to a plurality of node machines assigned wavelengths in advance such that the wavelengths of optical signals to be taken out of said network optical fiber are different from one another and the wavelengths of optical signals to be output to said network optical fiber are different from one another, and
said controller comprises:
a plurality of electric-optic converters that correspond to said plurality of node machines, respectively, and convert electric signals into optical signals of wavelengths assigned in advance to said plurality of node machines, respectively;
a multiplexer that multiplexes a plurality of optical signals different in wavelength converted by said plurality of electric-optic converters, and outputs the resultant optical signals to said network optical fiber;
a demultiplexer that demultiplexes optical signals of a plurality of wavelengths received through said network optical fiber into optical signals of the respective wavelengths;
a plurality of optic-electric converters that convert the optical signals demultiplexed by said demultiplexer into electric signals;
destination specifying means that specifies the destination on the basis of destination information contained in the electric signal converted by each of said optic-electric converters; and
an electric switch that outputs said electric signal to one of said electric-optic converters corresponding to the destination node machine specified by said destination specifying means.

6. The controller according to claim 5, ***characterized in that*** said controller is further connected to an external optical fiber connecting said controller to an external machine, and
said controller further comprises an external electric-optic converter that converts an electric signal converted by one of said optic-electric converters, into an optical signal of a wavelength determined for external communication, and outputs the optical signal after the conversion to said external optical fiber.

7. The controller according to claim 5, ***characterized in that*** said controller is further connected to an external optical fiber connecting said controller to an external machine, and
said controller further comprises an external optic-electric converter that converts an optical signal received from said external machine through said external optical fiber into an electric signal, and outputs the electric signal after the conversion to said destination specifying means.

8. A controller ***characterized in that*** said controller is connected through a network optical fiber extending in a ring to a plurality of node machines assigned wavelengths in advance such that the wavelengths of optical signals to be taken out of said network optical fiber are different from one another, and said controller is further connected to an external machine through an external optical fiber, and
said controller comprises:
a plurality of electric-optic converters that correspond to said plurality of node machines, respectively, and convert electric signals into optical signals of wavelengths assigned in advance to said plurality of node machines, respectively;
a multiplexer that multiplexes a plurality of optical signals different in wavelength generated by said plurality of electric-optic converters, and outputs the resultant optical signals to said network optical fiber;
an optic-electric converter that converts an optical signal received from said external machine through said external optical fiber into an electric signal;
destination specifying means that specifies the destination on the basis of destination information contained in the electric signal converted by said optic-electric converter; and
an electric switch that outputs said electric signal to one of said electric-optic converters corresponding to the destination node machine specified by said destination specifying means.
